# FASCICULE DE BREVET EUROPEEN

(11) **EP 1 070 639 B1**
(45) Date de publication et mention de la délivrance du brevet: **22.10.2003**
(21) Numéro de dépôt: 00401979.0
(22) Date de dépôt: 07.07.2000
(51) Int. Cl.: B60R 19/24

(54) **Bloc avant perfectionné pour véhicule automobile**
Verbessertes Kraftfahrzeugfrontteil
Improved vehicle front end

(30) Priorité: 19.07.1999 FR 9909348
(43) Date de publication de la demande: 24.01.2001
(73) Titulaire: ECIA INDUSTRIE, 92100 Boulogne (FR)
(72) Inventeur: Rondot, François, 25700 Valentigney (FR)
(74) Mandataire: Jacobson, Claude

(56) Documents cités:
- WO-A-92/11149
- FR-A- 2 736 315
- GB-A- 2 281 260

## Description

La présente invention concerne un bloc avant perfectionné pour véhicule automobile.

Habituellement, un véhicule automobile comprend un capot qui, en position fermée, est prolongé vers l'avant du véhicule par un bloc avant. Ce dernier comporte généralement une face avant ou serveur portant un pare-chocs, par exemple en forme de coque en plastique masquant la face avant.

En position fermée, le capot s'étend longitudinalement jusqu'au pare-chocs. Le capot et le pare-chocs sont séparés par un jeu sensiblement vertical délimité par deux bords en vis-à-vis de ce capot et de ce pare-chocs.

De façon classique, le pare-chocs est fixé, notamment par boulonnage, directement sur une partie fixe de la face avant. De ce fait, les défauts de géométrie du capot et de la face avant, dus notamment aux tolérances de fabrication de ces éléments, peuvent conduire à des irrégularités du jeu séparant le pare-chocs du capot.

FR-2 736 315 décrit un bloc avant selon le préambule de la revendication 1. Le bloc avant ne permet pas d'obtenir un jeu régulier entre le pare-chocs et le capot.

L'invention a pour but de s'affranchir des défauts de géométrie du capot et du pare-chocs de façon à obtenir aussi systématiquement que possible un jeu régulier entre le pare-chocs et le capot.

A cet effet, l'invention a pour objet un bloc avant selon la revendication 1.

D'autres caractéristiques facultatives de ce bloc avant sont précisées dans les revendications 2 à 6.

L'invention a également pour objet un véhicule automobile selon la revendication 7.

L'invention sera mieux comprise à la lecture de la description qui va suivre donnée uniquement à titre d'exemple et faite en se référant aux dessins dans lesquels :
- la figure 1 est une vue schématique de l'extrémité avant d'un véhicule automobile comportant un bloc avant selon l'invention ;
- la figure 2 est une vue de détail des moyens de réglage en hauteur du pare-chocs par rapport à la face avant du bloc avant représenté sur la figure précédente ;
- les figures 3 et 4 sont de vues en coupe suivant les lignes 3-3 et 4-4 respectivement de la figure 2.

Dans ce qui suit, les orientations avant, longitudinale et verticale sont considérées par rapport aux orientations habituelles d'un véhicule automobile.

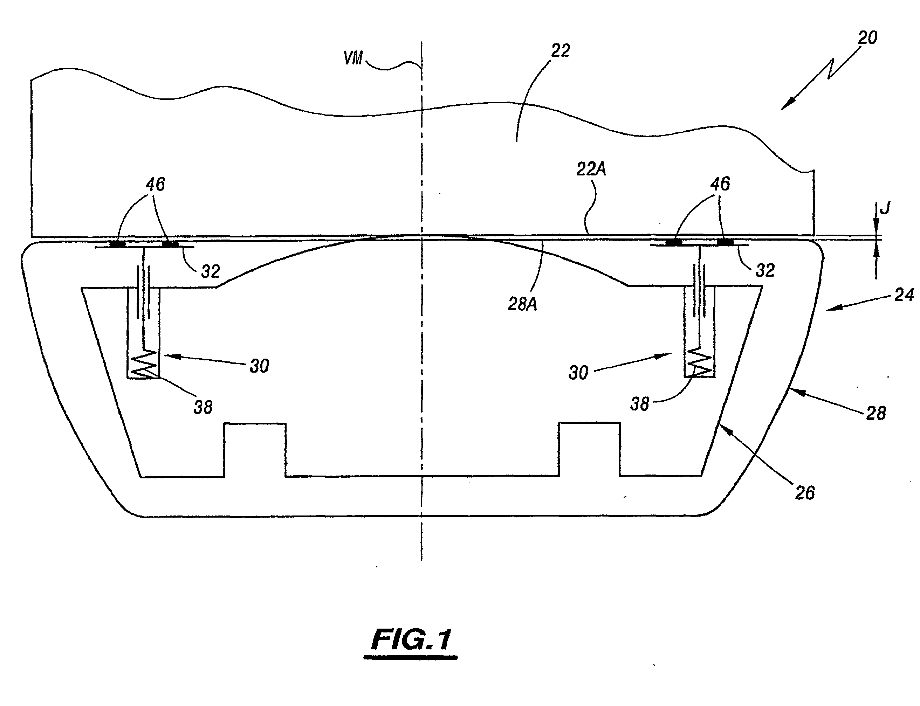

On a représenté schématiquement sur la figure 1 l'extrémité avant d'un véhicule automobile 20. Ce véhicule 20 comprend un capot 22 qui, en position fermée, est prolongé vers l'avant du véhicule par un bloc avant 24 selon l'invention.

Le bloc avant 24 comprend une face avant 26 portant un pare-chocs 28. Dans l'exemple illustré, ce pare-chocs 28 a une forme générale de coque, par exemple en plastique, et recouvre la face avant 26 de façon à la masquer.

Le capot 22 s'étend longitudinalement depuis le pare-brise du véhicule (non représenté) jusqu'au pare-chocs 28. Ce pare-chocs 28 et le capot 22 sont séparés par un jeu J sensiblement vertical délimité par de bords 28A, 22A en vis-à-vis de ce pare-chocs et de ce capot.

Le pare-chocs 28 est relié à la face avant 26 à l'aide de moyens de réglage en hauteur de ce pare-chocs 28 par rapport à cette face avant 26.

Ces moyens de réglage en hauteur comprennent de préférence deux dispositifs similaires 30 disposés sensiblement symétriquement entre eux par rapport à un plan vertical longitudinal médian VM du véhicule.

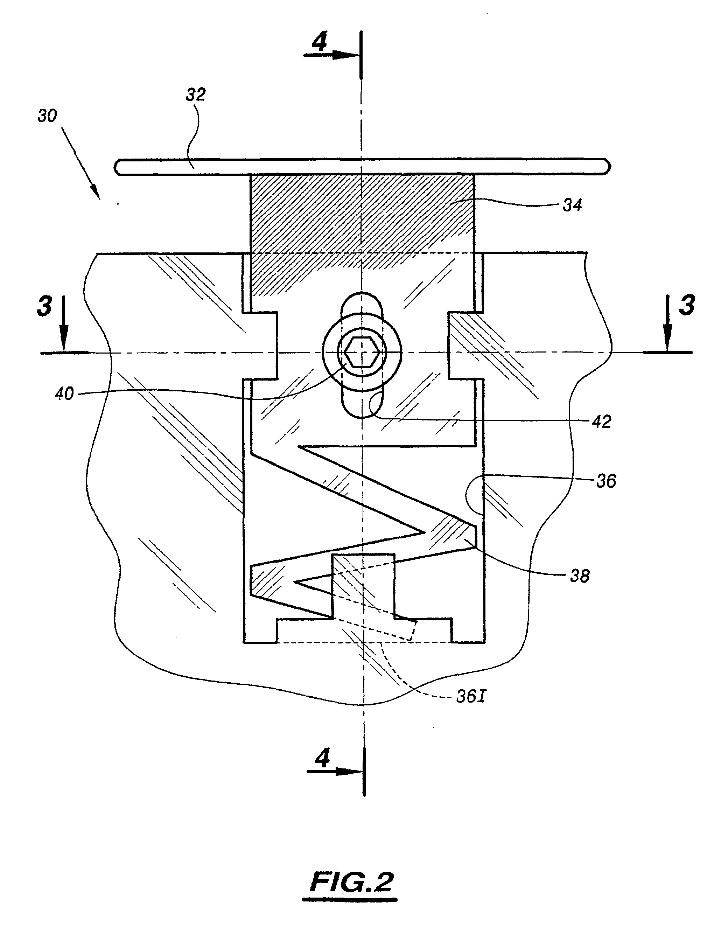

Dans ce qui suit, on décrira seulement un seul des dispositifs de réglage en hauteur 30 en se référant notamment aux figures 2 à 4 dans lesquelles un des dispositifs 30 est représenté plus en détail.

Le dispositif de réglage en hauteur 30 comprend une platine 32 de fixation du pare-chocs 28 portée par un corps 34, par exemple en forme générale de plaque montée coulissante sensiblement verticalement dans un guide 36 solidaire de la face avant 26.

Le corps 34 est déplaçable entre deux positions de hauteur minimale et maximale respectivement du pare-chocs par rapport à la face avant. Le corps 34 est sollicité en position de hauteur maximale, telle que représentée sur la figure 2, par des moyens de rappel élastique.

Dans l'exemple illustré, les moyens de rappel élastique sont venus de matière avec le corps 34 et comprennent, par exemple, un prolongement 38 s'étendant en boustrophédon de façon à former un ressort de poussée 38 déformable verticalement, sensiblement parallèlement aux faces du corps 34.

On notera que le ressort prolonge une extrémité du corps 34 interne au guide 36 alors que la platine de fixation 32 est solidaire d'une extrémité de ce corps 34 externe au guide 36.

Le ressort 38 prend appui sur une extrémité inférieure 36I du guide 36.

Le corps 34 est immobilisé dans une position de réglage en hauteur souhaitée à l'aide, par exemple, d'une vis 40 de serrage de ce corps 34 dans le guide 36 s'étendant à travers une boutonnière 42 sensiblement verticale du corps 34.

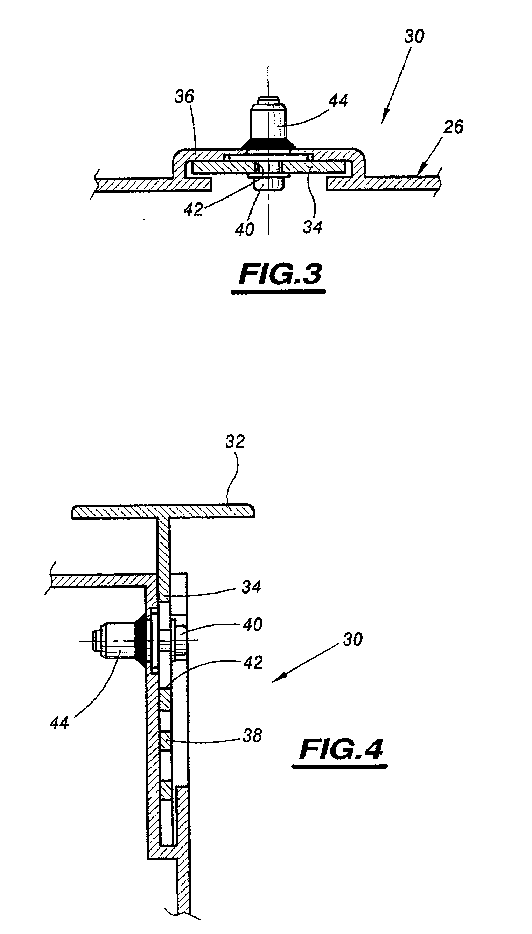

En se référant aux figures 3 et 4, on voit que la vis 40 coopère avec un organe formant écrou 44 solidaire du guide 36.

Lors du montage du bloc avant 24, on fixe l'extrémité supérieure du pare-chocs 28 sur la platine 32 de chaque dispositif de réglage en hauteur 30, à l'aide de moyens classiques, par exemple des vis 46 telles que schématisées sur la figure 1. Les vis 40 des dispositifs 30 ne sont pas serrées de façon à permettre le libre coulissement des corps 34 dans leur guide 36.

Puis, après montage du capot 22, on règle le jeu J entre ce capot 22 (en position fermée) et le pare-chocs 28 de façon que ce jeu soit régulier conformément à ce qui est souhaité.

Le réglage du jeu J est réalisé en déplaçant les platines 32 à l'encontre de la force élastique de rappel des ressorts 38. Une fois que la hauteur souhaitée des platines 32 est atteinte, ces dernières sont immobilisées par serrage des vis 40 correspondantes.

Parmi les avantages de l'invention, on notera que celle-ci permet de s'affranchir des éventuels défauts de géométrie de la face avant 26 et du capot 22 de façon à obtenir un jeu régulier entre le pare-chocs 28 et le capot 22.

Il est également à noter que les ressorts 38 facilitent le réglage de la position du pare-chocs 28 et du jeu J. Ainsi pour régler le jeu J à une valeur souhaitée, les vis 40 étant desserrées, on insère une cale de hauteur correspondante entre le capot 22 et le pare-chocs 28. Les ressorts 38 poussent alors le pare-chocs 28 contre la cale qui s'appuie contre le capot 22. Le jeu J est ainsi réglé à la valeur souhaitée et on serre ensuite les vis 40 pour immobiliser le pare-chocs 28 dans la position correspondante.

## Revendications

1. Bloc avant pour véhicule automobile, du type comprenant une face avant (26) portant un pare-chocs (28), le pare-chocs (28) étant relié à la face avant (26) à l'aide de moyens (30) de réglage en hauteur du pare-chocs (28) par "rapport à cette face avant (26), les moyens de réglage en hauteur comprenant au moins un corps (34) monté coulissant sensiblement verticalement dans la face avant (26), **caractérisé en ce que** les moyens (30) de réglage en hauteur comprennent au moins une platine (32) de fixation du pare-chocs (28) portée par le corps, et **en ce que** le corps (34) est déplaçable entre deux positions de hauteur minimale et maximale du pare-chocs (28) par rapport à la face avant (26), ce corps (34) étant sollicité en position de hauteur maximale par des moyens (38) de rappel élastique.

2. Bloc avant selon la revendication 1, **caractérisé en ce que** les moyens (38) de rappel élastique sont venus de matière avec le corps (34).

3. Bloc avant selon la revendication 2, **caractérisé en ce que** le corps (34) a une forme générale de plaque, les moyens de rappel élastique étant formés par un prolongement (38) de ce corps s'étendant en zigzag de façon à former un ressort de poussée déformable sensiblement parallèlement aux faces du corps (34).

4. Bloc avant selon l'une quelconque des revendications précédentes, **caractérisé en ce que** la face avant (26) comprend des moyens (40) d'immobilisation du corps (34) dans une position de réglage en hauteur souhaitée.

5. Bloc avant selon la revendication 4, **caractérisé en ce que** le corps (34) est monté coulissant dans un guide (36) solidaire de la face avant (26), les moyens d'immobilisation du corps (34) comprenant une vis (40) de serrage de ce corps (34) dans le guide (36) s'étendant à travers une boutonnière (42) sensiblement vertical du corps (34).

6. Bloc avant selon l'une quelconque des revendications précédentes, **caractérisé en ce qu'**il comprend deux platines (32) de fixation du pare-chocs (28) disposées sensiblement symétriquement entre elles par rapport à un plan vertical longitudinal médian (VM).

7. Véhicule automobile du type comprenant un capot (22) s'étendant longitudinalement jusqu'à un pare-chocs (28), le capot (22) et le pare-chocs (28) étant séparés par un jeu (J) sensiblement vertical délimité par des bords en vis-à-vis (22A, 28A) de ce capot et de ce pare-chocs, **caractérisé en ce que** le pare-chocs (28) est porté par une face avant (26) d'un bloc avant (24) selon l'une quelconque des revendications précédentes, les moyens (30) de réglage en hauteur du pare-chocs (28) permettant de régler le jeu (J) séparant ce pare-chocs (28) et ce capot (22).

## Patentansprüche

1. Frontbaugruppe für ein Kraftfahrzeug mit einer Vorderseite (26), die einen Stoßfänger (28) trägt, wobei der Stoßfänger (28) mit der Vorderseite (26) über Einrichtungen (30) zum Einstellen der Höhe des Stoßfängers (28) bezüglich der Vorderseite (26) verbunden ist, welche Einrichtungen zum Einstellen der Höhe wenigstens einen Körper (34) umfassen, der im Wesentlichen vertikal verschiebbar in der Vorderseite (26) angebracht ist, **dadurch gekennzeichnet, dass** die Einrichtungen (30) zum Einstellen der Höhe wenigstens eine Platte (32) zum Befestigen des Stoßfängers (28) umfassen, die vom Körper gehalten ist, und dass der Körper (34) zwischen zwei Positionen, nämlich einer Position mit größter und einer Position mit kleinster Höhe des Stoßfängers (28) bezüglich der Vorderseite (26) versetzbar ist, wobei der Körper (34) in die Position der größten Höhe über elastische Rückstelleinrichtungen (38) vorgespannt ist.

2. Frontbaugruppe nach Anspruch 1, **dadurch gekennzeichnet, dass** die elastischen Rückstelleinrichtungen (38) in einem Stück mit dem Körper (34) ausgebildet sind.

3. Frontbaugruppe nach Anspruch 2, **dadurch gekennzeichnet, dass** der Körper (34) die allgemeine Form einer Platte hat, wobei die elastischen Rückstelleinrichtungen durch eine Verlängerung (38) des Körpers gebildet sind, die zickzackförmig so verläuft, dass eine im Wesentlichen parallel zu den Außenflächen des Körpers (34) verformbare Druckfeder gebildet ist.

4. Frontbaugruppe nach einem der vorhergehenden Ansprüche, **dadurch gekennzeichnet, dass** die Vorderseite (26) Einrichtungen (40) zum Festlegen des Körpers (34) in einer Position der gewünschten Höheneinstellung umfasst.

5. Frontbaugruppe nach Anspruch 4, **dadurch gekennzeichnet, dass** der Körper (34) verschiebbar in einer Führung (36) angebracht ist, die fest mit der Vorderseite (26) verbunden ist, wobei die Einrichtungen zum Festlegen des Körpers (34) eine Schraube (40) zum Festklemmen des Körpers (34) in der Führung (36) umfassen, die quer durch ein Langloch (42) führt, das im Wesentlichen senkrecht durch den Körper (34) geht.

6. Frontbaugruppe nach einem der vorhergehenden Ansprüche, **dadurch gekennzeichnete, dass** sie zwei Platten (32) zum Befestigen des Stoßfängers (28) umfasst, die bezogen auf eine vertikale mittlere Längsebene (VM) im Wesentlichen symmetrisch zueinander angeordnet sind.

7. Kraftfahrzeug mit einer Motorhaube (22), die in Längsrichtung bis zu einem Stoßfänger (28) verläuft, wobei die Motorhaube (22) und der Stoßfänger (28) durch einen im Wesentlichen vertikalen Zwischenraum (J) getrennt sind, der von den gegenüberliegenden Rändern (22A, 28A) der Motorhaube und des Stoßfängers begrenzt ist, **dadurch gekennzeichnet, dass** der Stoßfänger (28) von einer Vorderseite (26) einer Frontbaugruppe nach einem der vorhergehenden Ansprüche gehalten ist, wobei die Einrichtungen (30) zum Einstellen der Höhe des Stoßfängers (28) eine Einstellung des Zwischenraums (J) erlauben, der den Stoßfänger (28) und die Motorhaube (22) trennt.

## Claims

1. Motor vehicle front end unit of the type comprising a front face (26) bearing a bumper (28), the bumper (28) being connected to the front face (26) with the aid of height adjustment means (30) for adjusting the height of the bumper (28) with respect to this front face (26), the height adjustment means comprising at least one body (34) mounted to slide roughly vertically in the front face (26), **characterized in that** the height adjustment means (30) comprise at least one mounting plate (32) for securing the bumper (28), this mounting plate being borne by the body, and **in that** the body (34) can be moved between two positions, minimum height and maximum height, of the bumper (28) with respect to the front face (26), this body (34) being urged into the maximum height position by elastic return means (38).

2. Front end unit according to Claim 1, **characterized in that** the elastic return means (38) are formed as an integral part of the body (34).

3. Front end unit according to Claim 2, **characterized in that** the body (34) has the overall shape of a plate, the elastic return means being formed by a continuation (38) of this body extending in a zigzag to form a thrusting spring that can be deformed roughly parallel to the faces of the body (34).

4. Front end unit according to any one of the preceding claims, **characterized in that** the front face (26) comprises means (40) for immobilizing the body (34) in a desired height-adjusted position.

5. Front end unit according to Claim 4, **characterized in that** the body (34) is mounted to slide in a guide (36) secured to the front face (26), the means for immobilizing the body (34) comprising a screw (40) for clamping this body (34) in the guide (36) running through a roughly vertical slot (42) in the body (34).

6. Front end unit according to any one of the preceding claims, **characterized in that** it comprises two mounting plates (32) for securing the bumper (28), these mounting plates being arranged roughly symmetrically to one another with respect to a vertical longitudinal mid-plane (VM).

7. Motor vehicle of the type comprising a bonnet (22) running longitudinally as far as a bumper (28), the bonnet (22) and the bumper (28) being separated by a roughly vertical clearance (J) delimited by facing edges (22A, 28A) belonging to this bonnet and to this bumper, **characterized in that** the bumper (28) is borne by a front face (26) of a front end unit (24) according to any one of the preceding claims, the means (30) for adjusting the height of the bumper (28) allowing the clearance (J) separating this bumper (28) and this bonnet (22) to be adjusted.
